# FASCICULE DE BREVET EUROPEEN

(11) **EP 2 931 979 B1**
(45) Date de publication et mention de la délivrance du brevet: **21.09.2016**
(21) Numéro de dépôt: 13815055.2
(22) Date de dépôt: 05.12.2013
(51) Int. Cl.: B01F 7/16, B09C 1/02, B09C 1/08, E02D 3/00, E02D 5/46

(54) **OUTIL MELANGEUR POUR LE TRAITEMENT D'UNE PORTION DE SOL**
MISCHWERKZEUG FÜR DIE BEHANDLUNG EINES ERDBEREICHES
MIXING TOOL FOR TREATING A PORTION OF SOIL

(30) Priorité: 11.12.2012 FR 1261906
(43) Date de publication de la demande: 21.10.2015
(73) Titulaire: SOLETANCHE FREYSSINET, 92500 Rueil Malmaison (FR)
(72) Inventeur: PERPEZAT, Daniel, F-92500 Rueil Malmaison (FR); MOSSER, Jean-François, F-92500 Rueil Malmaison (FR)
(74) Mandataire: Calvo de Nó, Rodrigo
(86) Numéro de dépôt international: PCT/FR2013/052953
(87) Numéro de publication internationale: WO 2014/091120

(56) Documents cités:
- EP-A1- 1 878 833
- FR-A1- 2 635 129

## Description

### DOMAINE TECHNIQUE

La présente invention se rapporte au domaine du traitement de portions de sol afin notamment d'en améliorer les caractéristiques mécaniques, physiques et/ou chimiques.

En particulier, la présente invention concerne un dispositif pour le traitement d'une portion de sol (ci-après dispositif de traitement) par mélange dudit sol avec un autre matériau, et un procédé de traitement de sol réalisé à l'aide de ce dispositif.

La présente invention concerne plus spécialement un dispositif de traitement du type comprenant un arbre rotatif s'étendant selon un axe principal et présentant une extrémité supérieure dirigée vers l'amont et une extrémité inférieure dirigée vers l'aval, au moins un outil mélangeur déployable fixé à l'arbre rotatif au voisinage de son extrémité inférieure, et une conduite longitudinale pour l'injection d'un fluide à proximité de l'outil mélangeur.

### ARRIERE-PLAN DE L'INVENTION

Le document EP 1 878 833 décrit un dispositif de traitement du type précité. Lorsqu'on souhaite traiter une portion de sol avec un tel dispositif, une première étape de forage est nécessaire pour réaliser, dans le sol, une cavité tubulaire. Cette première étape est réalisée à l'aide d'un outil de forage distinct, qui est extrait du trou de forage avant l'introduction du dispositif de traitement. La cavité tubulaire peut prendre la forme d'un simple trou de forage. Une autre solution consiste à introduire un tubage dans le sol puis à forer à l'intérieur dudit tubage pour réaliser la cavité. Dans une seconde étape, le dispositif de traitement est inséré à l'intérieur de la cavité et déplacé à l'intérieur de celle-ci jusqu'à ce que son extrémité inférieure pénètre dans la portion de sol à traiter. L'outil mélangeur est alors déployé, l'arbre est mis en rotation et un fluide est injecté simultanément dans la portion de sol par l'extrémité inférieure de l'arbre. La première étape de réalisation de la cavité tubulaire mobilise des outils de forage et nécessite du temps qui, de fait, n'est pas utilisé pour l'opération effective de traitement du sol. Lorsque la cavité tubulaire est délimitée par un tube, le retrait de ce tube constitue une troisième étape venant s'ajouter aux deux précédentes, réduisant encore la productivité du procédé de traitement.

### OBJET ET RESUME DE L'INVENTION

Un but de l'invention est de fournir un dispositif et un procédé de traitement qui surmontent substantiellement les inconvénients mentionnés ci-dessus.

Ce but est atteint avec un dispositif de traitement du type précité grâce au fait qu'il comprend en outre un outil de forage situé à l'extrémité inférieure de l'arbre, un élément tubulaire externe s'étendant selon un axe parallèle à l'axe principal de l'arbre rotatif, l'arbre rotatif étant disposé à l'intérieur dudit élément tubulaire, et un système de couplage entre l'arbre rotatif et l'élément tubulaire, ledit système de couplage étant, dans une première configuration, apte à solidariser l'élément tubulaire et l'arbre rotatif en rotation autour de l'axe principal, dans au moins un sens de rotation, et à solidariser l'élément tubulaire et l'arbre rotatif en translation le long de l'axe principal, au moins en direction de l'aval, et ledit système de couplage étant, dans une seconde configuration, apte à libérer lesdits mouvements de rotation et de translation.

Le dispositif selon l'invention est à la fois un dispositif de forage et un dispositif de mélange du sol avec un ou plusieurs autre(s) matériaux.

L'outil de forage est prévu directement à l'extrémité inférieure de l'arbre rotatif, de sorte qu'un trou de forage peut être réalisé au fur et à mesure de l'avancement du dispositif. Grâce au système de couplage entre l'arbre rotatif et l'élément tubulaire, ce dernier peut, en outre, être introduit dans le sol conjointement avec l'arbre rotatif, lors de l'opération de forage.

On rappelle que l'opération de forage est nécessaire lorsque la portion de sol à traiter est séparée de la surface du sol par une couche de sol qu'il ne faut pas traiter, notamment lorsque les colonnes de sol traité doivent être réalisées sous une couche de sol sur laquelle on ne veut pas intervenir.

Du fait du couplage entre l'arbre et l'élément tubulaire, le déplacement du dispositif de traitement en rotation et en translation dans le sol peut être obtenu au moyen d'un dispositif à simple tête d'entraînement. L'entraînement de l'arbre rotatif en rotation et en translation est transmis à l'élément tubulaire par le système de couplage, dans sa première configuration, pour que les deux éléments évoluent conjointement.

Lorsque le système de couplage est amené dans sa deuxième configuration, les mouvements relatifs de rotation et de translation entre l'arbre rotatif et l'élément tubulaire sont libérés. L'outil mélangeur, logé dans l'élément tubulaire lorsque le système de couplage se trouve dans sa première configuration, peut alors être extrait de l'élément tubulaire et introduit dans la portion de sol à traiter.

Au moyen de l'outil mélangeur, le dispositif de traitement selon l'invention est alors adapté pour réaliser une opération généralement appelée « soil mixing » qui consiste à déstructurer le sol puis à mélanger le sol déstructuré avec un fluide afin de modifier les caractéristiques de la portion de sol traitée. Ce fluide peut être par exemple un liquide réactif, un coulis destiné à faire prise, notamment un liant hydraulique, ou un gaz transportant des particules solides.

Il est particulièrement adapté pour des opérations de dépollution in situ. Dans ce cas, l'outil mélangeur déstructure le sol puis le mélange avec un réactif chimique.

Durant le traitement, sous l'effet de l'injection d'un fluide dans le sol, une certaine quantité de matériau peut avoir tendance à s'échapper vers la surface du sol. Avec les dispositions de l'invention, toute remontée de matériaux, et notamment de matériaux polluants, se fait par un passage situé entre l'arbre rotatif et l'élément tubulaire externe, le sol situé autour de l'élément tubulaire externe étant ainsi protégé.

Selon un exemple de réalisation, l'outil mélangeur déployable comprend au moins un bras mélangeur déployable fixé à l'extrémité inférieure de l'arbre rotatif et s'étendant latéralement par rapport à la direction longitudinale de l'arbre, ledit bras présentant une position déployée et une position rétractée, de telle sorte que, en position déployée, l'envergure de l'outil mélangeur est supérieure au diamètre externe de l'élément tubulaire pour permettre le traitement de la portion de sol par rotation de l'arbre, et en position rétractée, l'outil mélangeur est apte à être inséré dans l'élément tubulaire.

Selon un exemple, l'outil mélangeur comporte en outre des moyens ressorts aptes à provoquer le déploiement du bras mélangeur hors de l'élément tubulaire et à permettre son retour en position rétractée lors de l'insertion de la partie inférieure de l'arbre dans l'élément tubulaire.

La position déployée est alors la position naturelle du bras rétractable, c'est-à-dire qu'en l'absence de toute contrainte extérieure, le bras s'étend latéralement par rapport à la direction longitudinale de l'arbre en étant écarté de ce dernier grâce aux moyens ressorts. Lorsque l'outil mélangeur est inséré dans l'élément tubulaire, on comprend que la paroi interne de l'élément tubulaire agit sur le bras pour l'amener en position rétractée, c'est-à-dire vers l'arbre.

Dans le présent exposé, sauf précision contraire, une direction axiale est une direction parallèle à l'axe principal de l'arbre rotatif. En outre, une direction radiale est une direction perpendiculaire à l'axe principal et coupant cet axe. Sauf précision contraire, les adjectifs et adverbes axial, radial, axialement et radialement sont utilisés en référence aux directions axiale et radiale précitées. De la même manière, un plan axial est un plan contenant l'axe principal de l'arbre rotatif et un plan radial est un plan perpendiculaire à cet axe. De même, une section axiale est une section définie dans un plan axial, et une section radiale est une section définie dans un plan radial.

Sauf précision contraire, les adjectifs interne et externe sont utilisés en référence à une direction radiale de sorte que la partie ou la face interne (i.e. radialement interne) d'un élément est plus proche de l'axe principal que la partie ou la face externe (i.e. radialement externe) du même élément.

En outre, sauf précision contraire, les adjectifs supérieur et inférieur sont utilisés en référence à la direction d'introduction du dispositif dans le sol c'est-à-dire à la direction de forage, l'outil étant introduit par son extrémité inférieure et ressorti du sol par son extrémité supérieure.

Les termes amont et aval sont également définis par rapport au sens d'introduction du dispositif dans le sol, c'est-à-dire au sens de forage.

De façon avantageuse, le système de couplage est prévu au voisinage de l'extrémité inférieure de l'arbre rotatif et de l'élément tubulaire. On comprend qu'une partie de l'extrémité inférieure de l'arbre rotatif est alors couplée à une partie de l'extrémité inférieure de l'élément tubulaire, lorsque le système de couplage se trouve dans sa première configuration.

Par exemple, le système de couplage peut être situé directement en amont de l'outil mélangeur, ou, s'il y en a plusieurs, de l'outil mélangeur situé le plus en amont le long de l'axe principal.

En particulier, lorsque l'arbre rotatif et l'élément tubulaire sont respectivement un train de tiges et un train de tubes, le système de couplage est, de préférence, solidaire de la tige d'extrémité inférieure du train de tiges et du tube d'extrémité inférieure du train de tubes.

Comme indiqué précédemment, le système de couplage permet de solidariser l'élément tubulaire et l'arbre rotatif en rotation dans au moins un sens autour de l'axe principal de l'arbre rotatif et en translation au moins vers l'aval, le long de l'axe de l'arbre rotatif.

Or, comme il est bien connu de l'homme du métier, pour atteindre la profondeur de forage souhaitée, l'arbre rotatif d'un outil de forage est généralement constitué d'un train de tiges de forage, autrement dit d'une pluralité de tiges montées successivement l'une à la suite de l'autre. La liaison entre deux tiges de forage successives est alors souvent réalisée par vissage entre une extrémité filetée de l'une des tiges, et une extrémité filetée complémentaire de la seconde.

De la même manière, l'élément tubulaire externe est généralement constitué d'un train de tubes, autrement dit d'une pluralité de tubes montés successivement l'un à la suite de l'autre.

Pour le montage des trains de tubes et de tiges, on prévoit généralement un dispositif de serrage, aussi connu sous le nom de « guillotine ». Ce dispositif sert à immobiliser une première tige de forage ou un premier tube de forage introduit(e) dans le sol pour qu'une seconde tige - respectivement un second tube - puisse être vissé(e) sur son extrémité supérieure. Dans le cas contraire, la rotation de la seconde tige - respectivement du second tube - entraînerait la rotation simultanée de la première tige - respectivement du premier tube - à l'intérieur du trou de forage, empêchant un bon vissage entre les deux éléments.

Lorsque, de la manière décrite ci-dessus, l'arbre rotatif est constitué de plusieurs tiges mises bout à bout et reliées entre elles par des liaisons filetées, le système de couplage est généralement adapté à solidariser l'élément tubulaire et l'arbre rotatif en rotation au moins dans le sens de vissage des tiges, de manière à éviter leur dévissage lors de la mise en rotation de l'outil.

Comme tubes et tiges sont solidaires en rotation, les tubes sont immobilisés en rotation lorsque les tiges le sont. Par conséquent, lorsqu'au moins une tige et au moins un tube (de préférence la tige d'extrémité inférieure de l'arbre rotatif et le tube d'extrémité inférieure de l'élément tubulaire) sont couplés par le système de couplage, il suffit que ladite tige soit immobilisée par le dispositif de serrage pour qu'une nouvelle tige et un nouveau tube puissent être montés. L'assemblage se fait ainsi de façon très simple et rapide.

Selon une variante de réalisation, le système de couplage peut aussi être prévu à l'extrémité supérieure de l'arbre rotatif et de la structure tubulaire. Lorsque l'arbre rotatif et l'élément tubulaire sont respectivement un train de tiges et un train de tubes, le système de couplage est alors solidaire de la tige d'extrémité supérieure du train de tiges et du tube d'extrémité supérieure du train de tubes.

Après le traitement de la portion de sol au moyen de l'outil mélangeur, l'élément tubulaire peut être retiré conjointement avec l'arbre rotatif ou il peut être laissé dans le sol.

Notamment dans le cas où l'élément tubulaire doit pouvoir être retiré conjointement avec l'arbre rotatif et l'outil mélangeur, le système de couplage peut également être adapté à solidariser l'élément tubulaire et l'arbre rotatif en translation le long de l'axe principal, en direction de l'amont.

Le système de couplage peut ainsi comprendre des moyens de butée adaptés à coopérer avec l'arbre rotatif de sorte que l'arbre rotatif et l'élément tubulaire sont rendus solidaires en translation dans la direction amont quelle que soit la position angulaire de l'arbre rotatif. Le système de couplage n'ayant pas à être amené dans sa première configuration pour le retrait de l'outil, cette étape de retrait est considérablement facilitée.

Par exemple, les moyens de butée comprennent une collerette formée sur la face interne de l'élément tubulaire, le diamètre interne de ladite collerette étant inférieur au diamètre maximal de l'arbre rotatif en aval de ladite collerette.

Selon une disposition avantageuse de invention, le système de couplage est un système à baïonnette.

Un système à baïonnette est défini, selon l'invention, comme tout système de fixation doté d'un ou de plusieurs ergots s'engageant par rotation dans des crans prévus à cet effet.

Selon un exemple, le système de couplage comprend au moins un ergot formé sur la face interne de l'élément tubulaire et un nombre correspondant de cran(s) formé sur l'arbre rotatif, chaque ergot étant adapté à venir en butée radialement et axialement contre un cran.

A l'inverse, selon un autre exemple, le système de couplage peut comprendre au moins un ergot formé sur la face externe de l'arbre rotatif et un nombre correspondant de cran(s) formé sur l'élément tubulaire, chaque ergot étant adapté à venir en butée radialement et axialement contre un cran.

Les crans peuvent être de simples logements formant une seule butée axiale et une seule butée radiale.

Dans certaines configurations, l'arbre rotatif et l'élément tubulaire ne sont pas retirés conjointement du trou de forage. Le système de couplage est donc configuré pour que l'arbre rotatif et l'élément tubulaire ne soient pas solidaires en translation en direction de l'amont.

Dans d'autres configurations, le système de couplage pourra comporter d'autres moyens permettant la solidarisation des deux éléments en translation vers l'amont, notamment des moyens permettant cette solidarisation quelle que soit la position angulaire de l'arbre rotatif à l'intérieur de l'élément tubulaire, du type de la collerette évoquée précédemment.

Les crans peuvent aussi être des logements formant deux butées axiales et une butée radiale. Dans ce cas, le système de couplage est enclenché (i.e. amené dans sa première configuration) par un simple mouvement de pivotement assurant l'introduction de chaque ergot entre lesdites butées et le couplage en rotation est obtenu pour un seul sens de rotation, chaque ergot étant extrait de son cran respectif en cas de rotation inverse.

Selon une variante, les crans peuvent être des logements en L, munis respectivement d'un retour permettant le blocage des ergots dans les deux sens de rotation. Dans ce cas, le système est enclenché par un mouvement de rotation immédiatement suivi d'une translation destinée à amener le ou les ergots dans ladite partie de retour des crans. Le couplage en rotation est obtenu dans les deux sens de rotation.

On comprend que le système de couplage peut être formé par des éléments formant partie intégrante de l'arbre rotatif ou de l'élément tubulaire.

Le système de couplage peut aussi comprendre des éléments complémentaires coopérant avec l'arbre rotatif ou l'élément tubulaire, notamment fixés à l'un ou l'autre de ces éléments.

Certaines parties formant le système de couplage peuvent également être amovibles, comme il sera précisé dans la suite.

Selon un exemple de réalisation, le dispositif de traitement comprend au moins deux outils mélangeurs espacés axialement le long de l'axe principal.

Selon un exemple, les différents outils mélangeurs peuvent présenter des envergures différentes lorsqu'ils se trouvent en position déployée.

Pour cela, par exemple, les bras mélangeurs des différents outils mélangeurs peuvent présenter des longueurs différentes, notamment des longueurs augmentant progressivement le long de l'axe principal.

L'invention concerne également un procédé de traitement d'une portion de sol dans lequel on fournit un dispositif de traitement tel que défini ci-dessus, ledit procédé comprenant en outre au moins les étapes suivantes :
- on solidarise l'élément tubulaire et l'arbre rotatif en amenant le système de couplage dans sa première configuration,
- on descend l'arbre rotatif dans le sol conjointement avec l'élément tubulaire jusqu'à la portion de sol à traiter,
- on désolidarise l'arbre rotatif et l'élément tubulaire en amenant le système de couplage dans sa seconde configuration,
- on déplace l'arbre rotatif par rapport à l'élément tubulaire jusqu'à l'introduction de l'outil mélangeur dans la portion de sol à traiter,
- on déploie l'outil mélangeur, et
- on opère la rotation de l'arbre tout en injectant un fluide dans la portion de sol par la conduite longitudinale, ce par quoi le sol de ladite portion de sol est mélangé avec ledit fluide.

Le fluide injecté est par exemple un agent dépolluant ou un liant hydraulique.

Selon un mode de mise en oeuvre de l'invention, après le traitement de la portion de sol, l'élément tubulaire est extrait du sol conjointement avec l'arbre rotatif.

Dans le procédé de traitement selon la présente invention, les opérations de forage et de mélange du sol avec un autre matériau sont réalisées l'une directement à la suite de l'autre, sans retrait intermédiaire de l'outil de forage ni introduction d'un outil mélangeur distinct. Le dispositif utilisé étant à la fois un dispositif de forage et de mélange, une seule descente et une seule remontée du dispositif sont nécessaires.

Ceci est particulièrement avantageux lorsque la portion de sol à traiter est située en profondeur. Les méthodes de forage qui consistent à enfoncer des tiges dans le sol au fur et à mesure du forage pour atteindre la profondeur désirée, est fastidieuse. Le même problème se pose, après forage, pour l'assemblage de l'outil mélangeur.

La réalisation des deux étapes, de forage et de mélange, directement l'une à la suite de l'autre, à l'aide d'un seul et même dispositif, permet de diminuer considérablement la durée du procédé de traitement. L'assemblage des tiges et tubes, à l'avancement, est réalisé une seule fois, au lieu de deux lorsque forage et mélange sont réalisés à l'aide d'outils différents.

En outre, grâce aux dispositions de l'invention, tiges et tubes peuvent être assemblés en même temps, grâce à la présence du système de couplage. Il n'est plus nécessaire, comme c'était le cas avec les dispositifs de l'art antérieur, de descendre d'abord les tubes, puis ensuite les tiges.

Plusieurs modes de réalisation sont décrits dans le présent exposé. Toutefois, sauf précision contraire, les caractéristiques décrites en relation avec un mode quelconque peuvent être appliquées à un autre mode de réalisation.

### BREVE DESCRIPTION DES DESSINS

L'invention sera mieux comprise à la lecture de la description qui suit d'un mode de réalisation de l'invention donné à titre d'exemple non limitatif, en référence aux dessins annexés, sur lesquels :
- la figure 1 est une vue en coupe d'un dispositif de traitement selon un mode de réalisation de l'invention, le système de couplage étant dans sa première configuration ;
- la figure 2 est une vue en coupe selon A-A de la figure 1 ;
- la figure 3 est une vue en coupe selon B-B de la figure 1 ;
- les figures 4 et 5 sont des vues partielles, respectivement de face et en perspective, de l'arbre rotatif de la figure 1, montrant une partie du système de couplage ;
- les figures 6 et 7 sont des vues partielles de l'élément tubulaire, respectivement en perspective et en coupe, montrant une partie complémentaire du système de couplage ;
- la figure 8 est une vue partielle, éclatée, du système de couplage ;
- les figures 9A à 9F montrent les étapes successives d'un procédé de traitement d'une portion de sol selon un exemple de mise en oeuvre de l'invention ;
- les figures 10A à 10F illustrent les étapes d'assemblage d'un dispositif de traitement selon un exemple de réalisation de invention, dans lequel l'arbre rotatif est un train de tiges et l'élément tubulaire est un train de tubes ;
- les figures 11A et 11B illustrent un système de couplage pouvant être utilisé dans un dispositif de traitement selon un second mode de réalisation de l'invention ;
- la figure 12 montre plus en détail le fonctionnement du système de couplage détaillé sur les figures 11A et 11B.

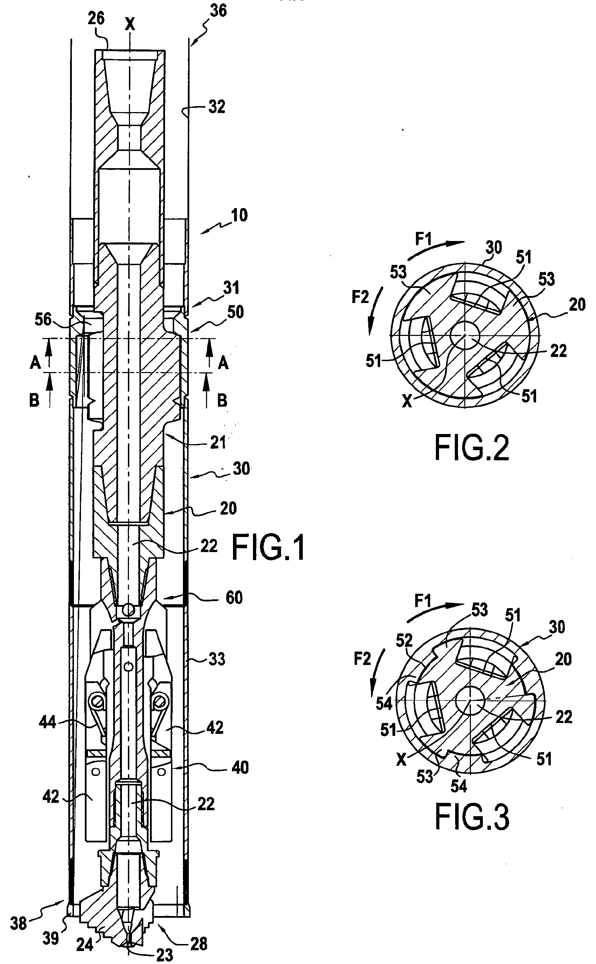

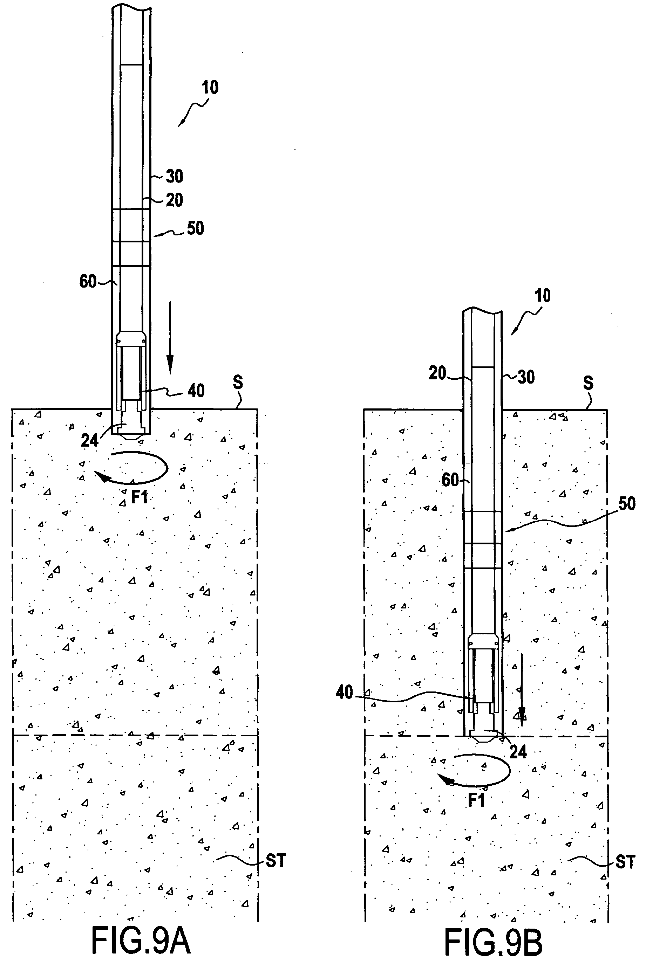

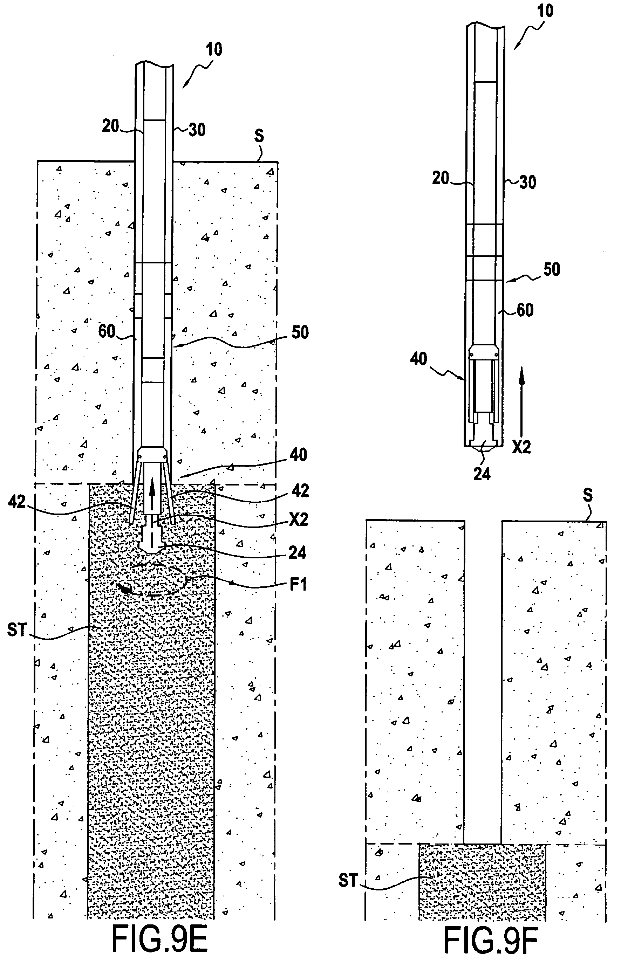

La figure 1 est une vue en coupe prise dans un plan vertical montrant un dispositif de traitement 10 selon l'invention, destiné à traiter une portion de sol définie à partir d'une profondeur P sous la surface S du sol. Si l'on se réfère à la figure 9A qui illustre une première étape du procédé de traitement selon l'invention mis en oeuvre au moyen dudit dispositif 10, la portion de sol à traiter est désignée par le signe ST.

Dans l'exemple, le dispositif 10 est déplacé verticalement, pour un forage à la verticale. On pourrait également utiliser ce dispositif 10 pour un forage à l'horizontale ou pour un forage incliné.

Comme on le constate sur la figure 1, le dispositif de traitement 10 comprend un arbre rotatif longitudinal 20 d'axe principal X fixé à des moyens de rotation non représentés ici mais connus par ailleurs, ainsi qu'un élément allongé creux ou élément tubulaire externe 30, notamment un tube, ici coaxial à l'arbre rotatif 20 et entourant ce dernier.

Le dispositif de traitement 10 décrit dans l'exemple est utilisé dans la mise en oeuvre d'un procédé de soil mixing.

Le soil mixing est un procédé qui consiste à traiter une portion de sol en mélangeant le sol déstructuré avec un fluide, tel un coulis ou un réactif, afin d'en changer les propriétés mécaniques, physiques et/ou chimiques.

Dans l'exemple illustré, l'arbre rotatif 20 comporte, à son extrémité inférieure, un outil de forage 24, par exemple un trilame, destiné à forer le sol pour assurer la progression du dispositif 10.

Par ailleurs, une conduite longitudinale 22 traverse l'arbre rotatif pour l'injection d'un fluide du type précité à proximité de l'extrémité inférieure 28 de l'arbre 20. Dans l'exemple, la conduite longitudinale 22 traverse l'outil de forage 24 et débouche au niveau d'un orifice d'injection 23 situé à l'extrémité inférieure dudit outil.

L'élément tubulaire externe 30 comporte, lui aussi, des dents de coupe 39 à son extrémité inférieure 38.

L'arbre rotatif 20 peut, lorsque la portion de sol à traiter ST est profonde, être constitué d'une succession de tiges vissées les unes aux autres. De la même manière, l'élément tubulaire 30 peut prendre la forme d'un train de tubes.

Dans l'exemple, comme il ressortira de la suite, tant l'arbre rotatif 20 que l'élément tubulaire 30 sont formés par l'assemblage, notamment par vissage, de plusieurs tronçons successifs.

Au voisinage de son extrémité inférieure, l'arbre 20 est pourvu d'un outil mélangeur déployable 40 comprenant ici deux bras 42 similaires disposés de part et d'autre d'un diamètre de l'arbre 20.

Lorsque l'outil déployable 40 se trouve dans l'élément tubulaire 30 comme représenté sur les figures 9A à 9C, la paroi interne de l'élément tubulaire 30 agit sur les bras 42 pour les amener dans une position rétractée dans laquelle ils s'étendent le long de l'extrémité inférieure de l'arbre 20. Dans cette position, l'intégralité de chaque bras 42 longe l'arbre 20. De cette façon, l'outil de forage 24, qui sort au moins partiellement au-delà de l'extrémité inférieure de l'élément tubulaire 30, peut percer le sol librement.

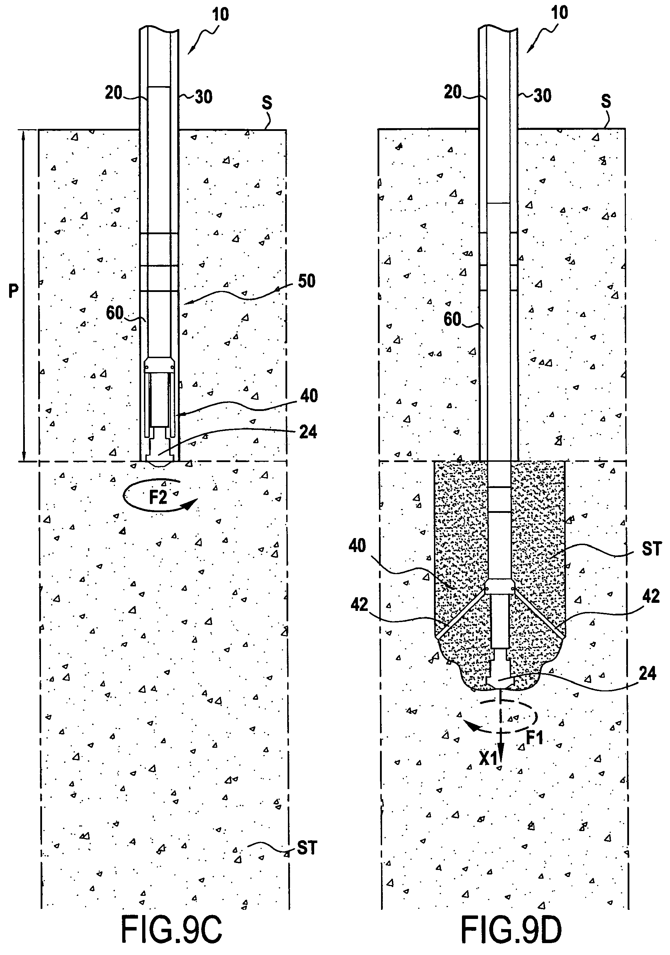

Comme on le voit sur la figure 9D, les deux bras 42 sont montés pivotants sur l'extrémité inférieure 28 de l'arbre 20 autour d'axes orthogonaux à la direction longitudinale X de l'arbre 20. De cette façon, les bras 42 peuvent s'étendre latéralement par rapport à la direction longitudinale X de l'arbre 20.

Des moyens ressort 44 (voir la figure 1) sont disposés entre l'arbre rotatif 20 et chacun des deux bras 42 de telle sorte que ces bras 42 ont une tendance naturelle à se déployer par rapport à l'axe X de l'arbre 20 grâce à l'action des ressorts 44, lorsqu'ils sont hors de l'élément tubulaire 30.

De préférence, dans leur position déployée, les bras 42 forment un angle ouvert vers l'extrémité inférieure de l'arbre, comme cela est représenté sur la figure 9D.

On comprend qu'en position déployée, les bras 42 permettent de déstructurer le sol lorsqu'on met en rotation l'arbre 20.

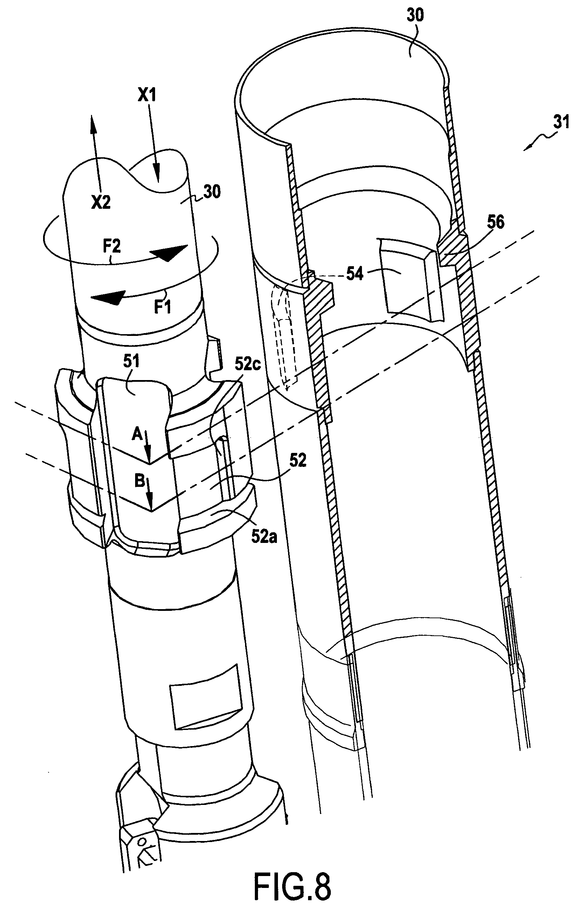

Comme il apparaît plus clairement sur la figure 8, l'arbre rotatif 20 présente une section généralement circulaire, de diamètre constant. De la même manière, l'élément tubulaire 30 présente une section généralement annulaire, de diamètres interne et externe constants.

Le diamètre externe de l'arbre rotatif 20 est inférieur au diamètre interne de l'élément tubulaire 30. Un passage annulaire 60, visible sur la figure 1, est ainsi conservé entre les deux éléments 20, 30. Comme il sera décrit plus en détail dans la suite, ce passage 60 permet la remontée des déchets de forage, c'est-à-dire du mélange de sol désagrégé et de fluide de forage issu de l'opération de forage.

Comme on le voit sur la figure 1, le dispositif 10 selon l'invention comprend un système de couplage désamorçable 50 entre l'arbre rotatif 20 et l'élément tubulaire 30.

Lorsque l'arbre rotatif 20 est logé à l'intérieur de l'élément tubulaire 30, autrement dit lorsque l'outil mélangeur 40 est en position rétractée, le système de couplage 50 est situé en amont de l'outil mélangeur 40.

Généralement, le système de couplage 50 comprend des premiers éléments fixés à ou formant partie intégrante de l'élément tubulaire 30 et des seconds éléments fixés à ou formant partie intégrante de l'arbre rotatif 20. En coopérant, ces premiers et seconds éléments bloquent certains degrés de liberté relatifs entre l'élément tubulaire 30 et l'arbre rotatif 20.

Dans l'exemple, le système de couplage 50 comporte une pluralité d'ergots 54 formés sur la paroi interne de l'élément tubulaire 30, adaptés à coopérer avec un nombre correspondant de logements 52 formés sur la paroi externe de l'arbre rotatif.

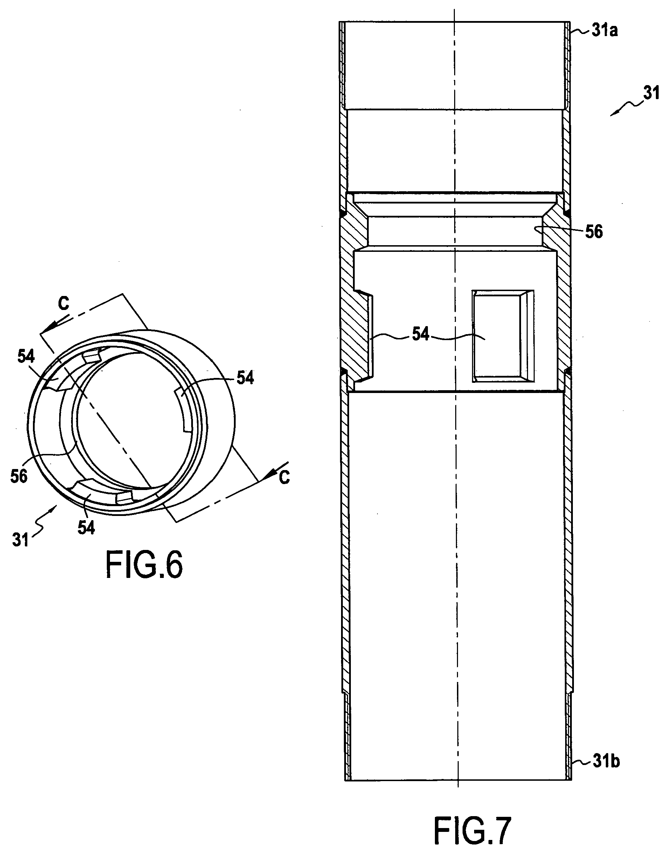

Les figures 6 et 7 illustrent un tronçon 31 de l'élément tubulaire 30 sur lequel sont formés les ergots 54. Ce tronçon 31 est fileté à chaque extrémité 31a, 31b pour sa fixation à un tube 32, 33, respectivement de tête et de pied, de l'élément tubulaire 30.

Chaque ergot 54 s'apparente, dans l'exemple, à un secteur angulaire d'une collerette interne formée sur la paroi interne de l'élément tubulaire 30.

Dans l'exemple, le système de couplage comporte trois ergots 54 répartis sur la paroi interne de l'élément tubulaire, en formant entre eux des angles de 120°.

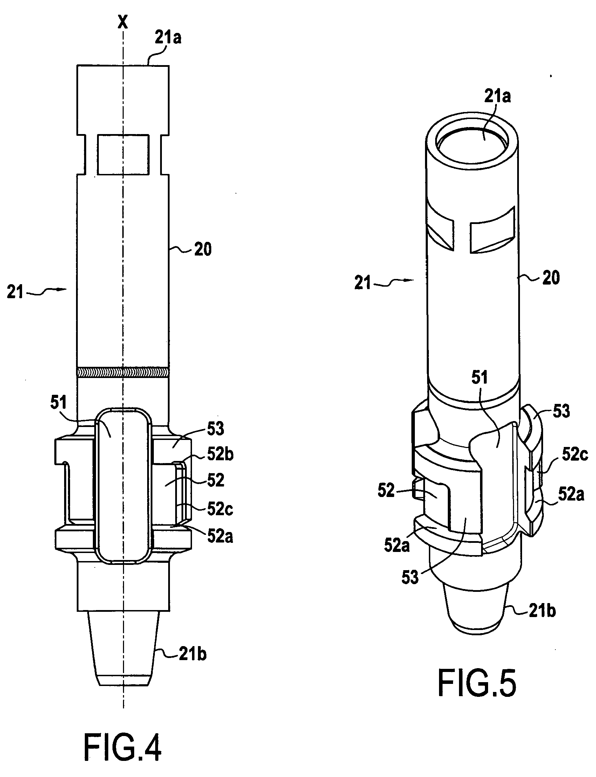

Comme il ressort des figures 4, 5 et 8, les logements 52 sont formés dans des parties en saillie 53 formées à la périphérie de l'arbre rotatif 20.

Les figures 4 et 5 notamment, illustrent un tronçon 21 de l'arbre rotatif 20 comportant ces parties en saillie 53. Ce tronçon 21 est fileté à chaque extrémité 21a, 21b pour sa fixation à un tronçon complémentaire de l'arbre rotatif 20.

La face radiale externe des parties en saillie 53 vient longer la face interne de l'élément tubulaire 30.

Entre les parties en saillie 53, l'arbre rotatif 20 comporte des rainures 51 s'étendant longitudinalement (i.e. dans la direction principale X). Chaque rainure 51 communique respectivement avec un des logements 52 et présente une largeur suffisante pour permettre à un ergot 54 de coulisser à l'intérieur dans la direction axiale.

Sur les figures 2 et 3, on observe que la profondeur des rainures 51 est choisie pour assurer une section d'écoulement suffisante pour les déchets de forage. Les parties en saillie 53 constituent en effet une restriction d'écoulement pour lesdits déchets, qui peut être compensée, au moins en partie, par lesdites rainures.

Pour accueillir un ergot 54, chaque logement 52 se présente sous la forme d'une entaille, ici de profil complémentaire à celui des ergots 54, réalisée dans la paroi extérieure des parties en saillies 53 de l'arbre rotatif 20.

On dira que le système de couplage se trouve dans sa première configuration lorsque chaque ergot 54 est logé à l'intérieur d'un logement 52.

Soit F1 le sens horaire illustré sur les différentes figures. Dans cette configuration, si l'arbre rotatif 20 est mis en rotation autour de l'axe X dans le sens F1, les ergots 54 viennent chacun en butée contre la paroi verticale 52c de leur logement 52 (définie dans un plan sensiblement axial). L'arbre rotatif 20 entraîne ainsi, dans son mouvement, l'élément tubulaire 30.

Lorsque, dans le même temps, l'arbre rotatif 20 est déplacé vers l'aval, c'est-à-dire vers le bas sur les différentes figures (direction notée X1), les ergots 54 viennent en butée contre la paroi horizontale amont 52b de leur logement 52 (définie dans un plan radial). En conséquence, l'arbre rotatif 20 entraîne l'élément tubulaire 30 dans son mouvement de translation.

Lorsque le système de couplage 50 se trouve dans sa première configuration, et lorsque, comme sur les figures 9A et 9B, l'arbre rotatif 20 est mis en rotation dans le sens horaire F1 et translaté vers l'aval (X1), c'est-à-dire vers la profondeur du sol, il entraîne avec lui l'élément tubulaire 30.

Le sol est désagrégé par l'outil de forage 24 au centre et par les dents de forage 39 à la périphérie du dispositif 10. Dans le même temps, un fluide de forage, généralement de l'eau, est acheminé dans le sol, à proximité de l'outil de forage 24, par la conduite longitudinale 22.

Le mélange de sol et de fluide de forage remonte par le passage annulaire 60 formé entre l'élément tubulaire 30 et l'arbre rotatif 20. Au niveau du système de couplage 50, le mélange passe dans les rainures 51 formées à la périphérie de l'arbre 20, entre les parties en saillie 53.

Les mouvements de translation et de rotation sont poursuivis jusqu'à ce que l'extrémité inférieure de l'élément tubulaire 30 atteigne la partie de sol à traiter ST, autrement dit la profondeur P.

Pour que l'outil mélangeur 40 puisse être introduit dans la portion de sol à traiter ST, le système de couplage 50 est amené dans sa seconde position, de la façon illustrée sur la figure 9C.

Tandis que l'élément tubulaire 30 est maintenu en position, par le frottement du sol ou par un dispositif de serrage prévu à cet effet, l'arbre rotatif 20 est pivoté dans le sens anti-horaire F2, d'environ 45°, de sorte que les ergots 54 sont extraits de leur logement respectif 52 et introduits dans les rainures 51.

Comme cela est illustré sur la figure 9D, l'arbre rotatif 20 est alors translaté vers l'aval (X1), jusqu'à ce que les ergots 54 quittent lesdites rainures 51.

Le système de couplage se trouve alors dans sa seconde configuration, dans laquelle l'arbre rotatif 20 et l'élément tubulaire 30 ne sont plus couplés en rotation, ni en translation.

L'arbre rotatif 20 peut alors être déplacé vers l'aval (X1) jusqu'à ce que son extrémité inférieure, et en particulier l'outil mélangeur 40, soit extrait(e) de l'élément tubulaire 30 et pénètre dans la portion de sol à traiter ST.

Lorsque les bras 42 sont déployés, on opère alors la rotation de l'arbre 20 tout en injectant un fluide dans la portion de sol ST par l'extrémité inférieure de l'arbre 20, par quoi la zone traitée est circonscrite à ladite portion de sol.

Une fois la portion de sol traitée jusqu'à la profondeur souhaitée, l'arbre rotatif 20 est remonté (X2), jusqu'à ce que l'outil mélangeur 40, en particulier, soit logé à nouveau à l'intérieur de l'élément tubulaire 30.

L'arbre rotatif 20 est translaté vers l'amont le long de l'axe principal X, et simultanément mis en rotation.

Inévitablement, l'élément tubulaire externe étant fixe, les rainures 51 de l'arbre rotatif 20 viennent en regard des ergots 54, lesquels s'y logent automatiquement.

Pour extraire l'élément tubulaire conjointement avec l'arbre rotatif, il serait relativement compliqué (bien que possible en usant de suffisamment de précision) de réintroduire chaque ergot 54 dans l'un des logements 52 afin de coupler l'arbre rotatif 20 et l'élément tubulaire 30 en translation vers l'amont.

Par conséquent, comme il ressort plus particulièrement de la figure 8, une collerette interne 56 est formée en amont des ergots 54, sur la paroi interne de l'élément tubulaire 30. Cette collerette interne 56 présente un diamètre interne inférieur au diamètre de l'arbre rotatif 20 sur sa portion située en aval, notamment du diamètre du cercle dans lequel s'inscrivent les parties en saillie 53.

La collerette 56 forme une bordure annulaire continue, qui assure le blocage en translation de l'arbre rotatif 20 par rapport à l'élément tubulaire 30 quelle que soit la position angulaire de l'arbre rotatif 20.

La butée formée par la collerette 56 assure le retrait aisé de l'élément tubulaire 30 simultanément à l'arbre rotatif 20.

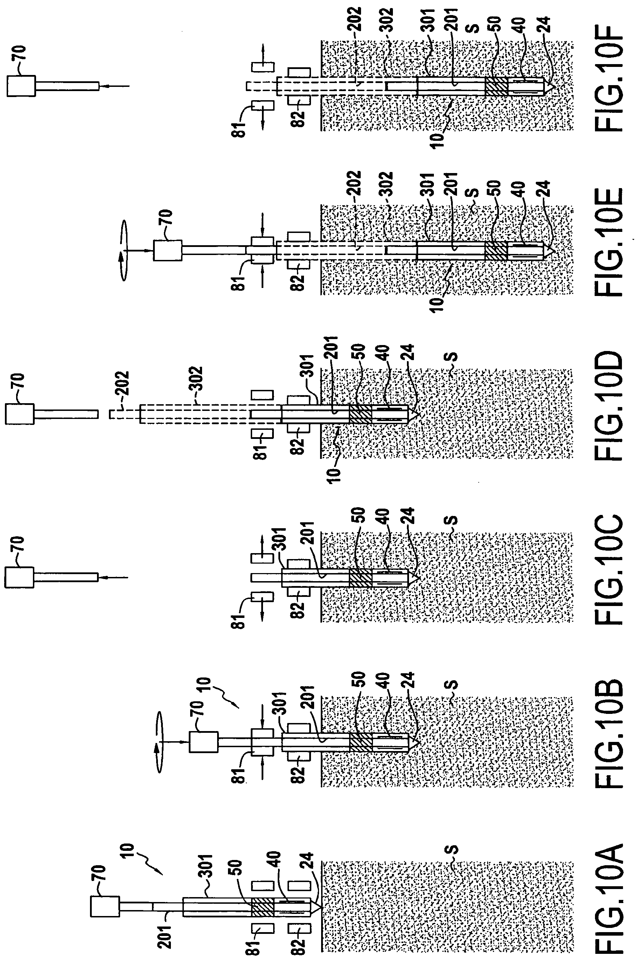

Les figures 10A à 10F illustrent l'assemblage, à l'avancement, d'un dispositif 10 selon l'invention dans lequel l'arbre rotatif 20 et l'élément tubulaire 30 sont respectivement un train de tiges et un train de tubes.

Sur la figure 10A, une tige inférieure 201 (ou première tige) de l'arbre rotatif 20 est fixée à un dispositif de déplacement comportant une tête de rotation 70 et entourée d'un tube inférieur 301 (ou premier tube) de l'élément tubulaire 30. On note que, pour des raisons qui seront détaillées plus loin, une portion de la première tige 201 fait saillie à l'extrémité supérieure du premier tube 301.

Un système de couplage 50 du type décrit précédemment, est formé entre la première tige 201 et le premier tube 301, et amené dans sa première configuration. Dans cette configuration, la première tige 201 et le premier tube 301 sont couplés en rotation dans le sens de vissage des tiges, qui correspondra également, pour des raisons évidentes, au sens de rotation du dispositif lors des opérations de forage.

Comme dans l'exemple décrit précédemment, un outil de forage 24 est prévu à l'extrémité inférieure de la première tige 201, et un outil de mélange 40 est prévu entre le système de couplage 50 et l'outil de forage 24.

Deux guillotines, respectivement amont 81 et aval 82, sont disposées au droit de l'emplacement prévu pour le forage, et donc de la portion de sol à traiter.

Dans une première étape, illustrée sur la figure 10B, l'ensemble est mis en rotation par la tête de rotation 70 et translaté vers l'aval de façon à pénétrer dans le sol, jusqu'à ce que le premier tube 301 se trouve en regard de la guillotine aval 82 et que la portion de la première tige 201 débouchant hors du tube 301 se trouve en regard de la guillotine amont 81.

La guillotine aval 82 est serrée autour du premier tube 301.

Le premier tube 301 et la première tige 201 étant couplée en rotation grâce au système de couplage 50, la première tige 201 est immobilisée dans le sens de rotation usuel du dispositif.

Une rotation de la tige 201 dans le sens inverse, au contraire, viendrait désamorcer le couplage avec le premier tube 301.

Pour dévisser la tête de rotation 70, comme illustré sur la figure 10B, la première tige 201 est donc, de la même façon, « prise en étau » par la guillotine amont 81.

Une fois dévissée, la tête de rotation 70 est remontée, et la guillotine amont 81 est desserrée (voir figure 10C), pour permettre le vissage, sur la première tige 201 et le premier tube 301, respectivement d'une seconde tige 202 et d'un second tube 302 (voir figure 10D).

L'ensemble est une nouvelle fois mis en rotation et introduit dans le sol, comme illustré sur la figure 10E. Une nouvelle fois, les deux guillotines 81, 82 sont resserrées.

La tête de rotation 70 est dévissée.

Comme illustré sur la figure 10F, la guillotine amont 81 est une nouvelle fois desserrée, et la tête de rotation 70, éloignée pour permettre le vissage sur la seconde tige 201 et le second tube 301, respectivement d'une troisième tige et d'un troisième tube (non représentées).

L'ensemble des étapes précitées est réitéré autant de fois que nécessaire pour atteindre une profondeur de forage suffisante.

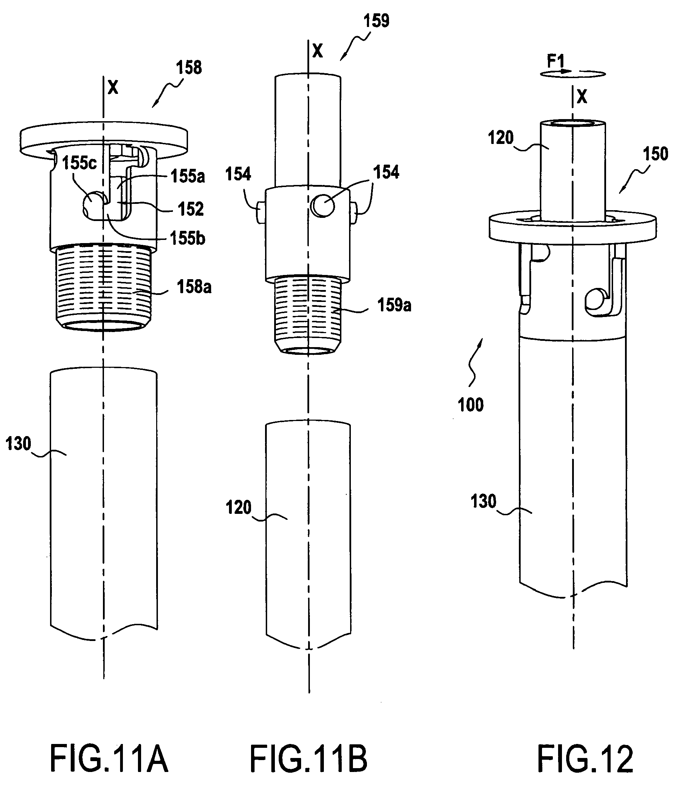

Un dispositif de traitement 100 selon un second mode de réalisation de la présente invention est illustré sur les figures 11A, 11B et 12.

L'outil de mélange et l'outil de forage restent positionnés comme dans le mode de réalisation décrit précédemment, et leurs structures respectives restent également identiques. Ils ne sont donc pas représentés ni décrits à nouveau.

Ce mode de réalisation diffère essentiellement du précédent en ce que le système de couplage 150 est situé au voisinage de l'extrémité supérieure du dispositif 100.

Il s'agit néanmoins, comme précédemment, d'un système à baïonnette.

Le système de couplage 150 comprend une pluralité d'ergots (ici trois) 154, formés cette fois sur la paroi externe de l'arbre rotatif 120, et un nombre correspondant de logements 152 formés dans la paroi de l'élément tubulaire 130.

Comme le système de couplage 150 est situé à l'extrémité supérieure du dispositif, il est nécessaire qu'il puisse être démonté dans les cas où l'arbre rotatif 120 et l'élément tubulaire 130 sont respectivement un train de tiges et un train de tubes.

Dans l'exemple, le système de couplage 150 comprend donc deux pièces 158, 159 fixées de façon amovibles respectivement à l'extrémité supérieure de l'élément tubulaire 130 et à l'extrémité supérieure de l'arbre rotatif 120.

Une première pièce 158, en forme de douille, est adaptée à coopérer avec l'extrémité supérieure d'un tube de l'élément tubulaire 130 par son extrémité filetée 158a (voir la figure 11A).

Une seconde pièce 159, sensiblement cylindrique, est adaptée à coopérer avec l'extrémité supérieure d'une tige de l'arbre rotatif 20 par son extrémité filetée 159a (voir la figure 11B).

On comprend que les trois ergots 154 sont adaptés à coulisser dans les fentes correspondantes 152 formées sur la première pièce 158.

Dans l'exemple de la figure 11A, chaque fente 152 présente un premier tronçon 155a s'étendant longitudinalement, dans la direction de l'axe X, un second tronçon 155b s'étendant transversalement audit premier tronçon 155a, et un retour 155c.

Selon le même principe que décrit précédemment en liaison avec le premier mode de réalisation, on dit que le système de couplage 150 se trouve dans sa première configuration lorsque chaque ergot 154 est positionné dans un retour 155c correspondant formé sur l'élément tubulaire 130.

Dans cette première configuration, l'arbre rotatif 120 et l'élément tubulaire 130 sont couplés en translation vers l'aval, et en rotation dans le sens horaire F1 (voir la figure 12).

## Revendications

1. Dispositif (10, 100) pour le traitement d'une portion de sol (ST), comprenant :
- un arbre rotatif (20, 120) s'étendant selon un axe principal (X) et présentant une extrémité supérieure (26) dirigée vers l'amont et une extrémité inférieure (28) dirigée vers l'aval,
- au moins un outil mélangeur déployable (40) fixé à l'arbre rotatif (20, 120) au voisinage de son extrémité inférieure (28), et
- une conduite longitudinale (22) pour l'injection d'un fluide à proximité de l'extrémité inférieure de l'arbre rotatif (20, 120), **caractérisé en ce qu'**il comprend en outre
- un outil de forage (24) situé à l'extrémité inférieure de l'arbre,
- un élément tubulaire externe (30, 130) s'étendant selon un axe parallèle à l'axe principal (X) de l'arbre rotatif (20, 120), l'arbre rotatif (20, 120) étant disposé à l'intérieur dudit élément tubulaire (30, 130), et
- un système de couplage (50, 150) entre l'arbre rotatif (20, 120) et l'élément tubulaire (30, 130), ledit système de couplage (50, 150) étant, dans une première configuration, apte à solidariser l'élément tubulaire (30, 130) et l'arbre rotatif (20, 120) en rotation autour de l'axe principal (X), dans au moins un sens de rotation, et à solidariser l'élément tubulaire (30, 130) et l'arbre rotatif (20, 120) en translation le long de l'axe principal (X), au moins en direction de l'aval, et ledit système de couplage (50, 150) étant, dans une seconde configuration, apte à libérer lesdits mouvements de rotation et de translation.

2. Dispositif de traitement (10, 100) selon la revendication 1, dans lequel l'outil mélangeur (40) est logé dans l'élément tubulaire (30, 130) lorsque le système de couplage (50, 150) se trouve dans sa première configuration.

3. Dispositif de traitement (10, 100) selon la revendication 1 ou 2, dans lequel l'outil mélangeur (40) est adapté à être extrait de l'élément tubulaire (30, 130) et introduit dans une portion de sol à traiter (ST) lorsque le système de couplage (50, 150) se trouve dans sa seconde configuration.

4. Dispositif de traitement (10, 100) selon l'une quelconque des revendications 1 à 3, dans lequel le système de couplage (50, 150) est un système à baïonnette.

5. Dispositif de traitement (10, 100) selon la revendication 4, dans lequel le système de couplage (50) comprend au moins un ergot (54) formé sur la face interne de l'élément tubulaire (30) et un nombre correspondant de cran(s) (52) formé sur l'arbre rotatif (20), chaque ergot (54) étant adapté à venir en butée radialement et axialement contre un cran (52).

6. Dispositif de traitement (10, 100) selon l'une quelconque des revendications 1 à 5, dans lequel l'outil mélangeur déployable (40) comprend au moins un bras mélangeur déployable (42) fixé à l'extrémité inférieure (28) de l'arbre rotatif (20, 120) et s'étendant latéralement par rapport à la direction principale (X) de l'arbre (20, 120), ledit bras (42) présentant une position déployée et une position rétractée, de telle sorte que, en position déployée, l'envergure de l'outil mélangeur (40) est supérieure au diamètre externe de l'élément tubulaire (30, 130) pour permettre le traitement de la portion de sol (ST) par rotation de l'arbre (20, 120), et en position rétractée, l'outil mélangeur (40) est apte à être inséré dans l'élément tubulaire (30, 130).

7. Dispositif de traitement (10, 100) selon la revendication 6, dans lequel l'outil mélangeur (40) comporte en outre des moyens ressorts (44) aptes à provoquer le déploiement du bras mélangeur (42) hors de l'élément tubulaire (30) et à permettre son retour en position rétractée lors de l'insertion de la partie inférieure (28) de l'arbre (20, 120) dans l'élément tubulaire (30, 130).

8. Dispositif de traitement (10, 100) selon l'une quelconque des revendications 1 à 7, dans lequel le système de couplage (50, 150) est apte à solidariser l'élément tubulaire (30, 130) et l'arbre rotatif (20, 120) en rotation autour de l'axe principal (X), dans les deux sens de rotation.

9. Dispositif de traitement (10, 100) selon l'une quelconque des revendications 1 à 8, dans lequel le système de couplage (50, 150) est en outre adapté à solidariser l'élément tubulaire (30, 130) et l'arbre rotatif (20, 120) en translation le long de l'axe principal (X), en direction de l'amont.

10. Dispositif de traitement (10, 100) selon la revendication 9, dans lequel le système de couplage (50) comprend en outre des moyens de butée (56) adaptés à coopérer avec l'arbre rotatif (20) de sorte que l'arbre rotatif (20) et l'élément tubulaire (30) sont rendus solidaires en translation dans la direction amont quelle que soit la position angulaire de l'arbre rotatif (20).

11. Dispositif de traitement (10, 100) selon la revendication 10, dans lequel les moyens de butée (56) comprennent une collerette formée sur la face interne de l'élément tubulaire (30), le diamètre interne de ladite collerette (56) étant inférieur au diamètre maximal de l'arbre rotatif (20) sur la portion dudit arbre (20) située en aval de ladite collerette (56).

12. Dispositif de traitement (10, 100) selon l'une quelconque des revendications 1 à 11, comprenant au moins deux dispositifs mélangeurs (40) espacés axialement le long de l'axe principal (X).

13. Dispositif de traitement (10, 100) selon l'une quelconque des revendications 1 à 12, dans lequel le système de couplage (50) est prévu au voisinage de l'extrémité inférieure (28) de l'arbre rotatif (20) et de l'élément tubulaire (30).

14. Procédé de traitement d'une portion de sol dans lequel on fournit un dispositif de traitement (10, 100) selon l'une quelconque des revendications 1 à 13, ledit procédé comprenant en outre au moins les étapes suivantes :
- on solidarise l'élément tubulaire (30, 130) et l'arbre rotatif (20, 120) en amenant le système de couplage (50, 150) dans sa première configuration,
- on descend l'arbre rotatif (20, 120) dans le sol (S) conjointement avec l'élément tubulaire (30, 130) jusqu'à la portion de sol à traiter (ST),
- on désolidarise l'arbre rotatif (20, 120) et l'élément tubulaire (30, 130) en amenant le système de couplage (50, 150) dans sa seconde configuration,
- on déplace l'arbre rotatif (20, 120) par rapport à l'élément tubulaire (30, 130) jusqu'à l'introduction de l'outil mélangeur (40) dans la portion de sol à traiter (ST),
- on déploie l'outil mélangeur (40), et
- on opère la rotation de l'arbre (20, 120) tout en injectant un fluide dans la portion de sol par la conduite longitudinale (22), ce par quoi le sol de ladite portion de sol (ST) est mélangé avec ledit fluide.

15. Procédé de traitement d'une portion de sol selon la revendication 14, dans lequel, après le traitement de la portion de sol (ST), l'élément tubulaire (30, 130) est extrait du sol conjointement avec l'arbre rotatif (20, 120).

16. Procédé de traitement d'une portion de sol selon la revendication 14 ou 15, dans lequel le fluide injecté est un agent dépolluant.

17. Procédé de traitement d'une portion de sol selon la revendication 14 ou 15, dans lequel le fluide injecté est un liant hydraulique.

## Patentansprüche

1. Vorrichtung (10, 100) zur Bearbeitung eines Bodenabschnitts (ST), umfassend:
- eine Drehwelle (20, 120), die sich entlang einer Hauptachse (X) erstreckt und ein oberes Ende (26), das stromaufwärts gerichtet ist, und ein unteres Ende (28), das stromabwärts gerichtet ist, aufweist,
- mindestens ein ausfahrbares Mischwerkzeug (40), das an der Drehwelle (20, 120) in der Nähe ihres unteren Endes (28) befestigt ist, und
- eine Längsleitung (22) zum Einspritzen eines Fluids in der Nähe des unteren Endes der Drehwelle (20, 120),
**dadurch gekennzeichnet, dass** sie ferner umfasst
- ein Bohrwerkzeug (24), das sich am unteren Ende der Welle befindet,
- ein äußeres röhrenförmiges Element (30, 130), das sich entlang einer Achse parallel zur Hauptachse (X) der Drehwelle (20, 120) erstreckt, wobei die Drehwelle (20, 120) im Inneren des röhrenförmigen Elements (30, 130) angeordnet ist, und
- ein Kupplungssystem (50, 150) zwischen der Drehwelle (20, 120) und dem röhrenförmigen Element (30, 130), wobei das Kupplungssystem (50, 150) in einer ersten Anordnung geeignet ist, das röhrenförmige Element (30, 130) und die Drehwelle (20, 120) in Drehung um die Hauptachse (X) in mindestens eine Drehrichtung zu verbinden, und das röhrenförmige Element (30, 130) und die Drehwelle (20, 120) in Translation entlang der Hauptachse (X), zumindest in stromabwärtige Richtung, zu verbinden, und wobei das Kupplungssystem (50, 150) in einer zweiten Anordnung geeignet ist, die Dreh- und Translationsbewegungen freizugeben.

2. Bearbeitungsvorrichtung (10, 100) nach Anspruch 1, bei der das Mischwerkzeug (40) in dem röhrenförmigen Element (30, 130) angeordnet ist, wenn sich das Kupplungssystem (50, 150) in seiner ersten Anordnung befindet.

3. Bearbeitungsvorrichtung (10, 100) nach Anspruch 1 oder 2, bei der das Mischwerkzeug (40) geeignet ist, aus dem röhrenförmigen Element (30, 130) herausgezogen und in einen zu bearbeitenden Bodenabschnitt (ST) eingeführt zu werden, wenn sich das Kupplungssystem (50, 150) in seiner zweiten Anordnung befindet.

4. Bearbeitungsvorrichtung (10, 100) nach einem der Ansprüche 1 bis 3, bei dem das Kupplungssystem (50, 150) ein System mit Bajonettverschluss ist.

5. Bearbeitungsvorrichtung (10, 100) nach Anspruch 4, bei der das Kupplungssystem (50) mindestens einen Haken (54) umfasst, der auf der Innenseite des röhrenförmigen Elements (30) ausgebildet ist, und eine entsprechende Zahl von Kerben (52), die auf der Drehwelle (20) ausgebildet sind, wobei jeder Haken (54) dazu vorgesehen ist, radial und axial an einer Kerbe (52) zum Anschlag zu gelangen.

6. Bearbeitungsvorrichtung (10, 100) nach einem der Ansprüche 1 bis 5, bei der das ausfahrbare Mischwerkzeug (40) mindestens einen ausfahrbaren Mischarm (42) umfasst, der am unteren Ende (28) der Drehwelle (20, 120) befestigt ist und sich seitlich in Bezug zur Hauptrichtung (X) der Welle (20, 120) erstreckt, wobei der Arm (42) eine ausgefahrene Position und eine eingezogene Position aufweist, so dass in der ausgefahrenen Position die Reichweite des Mischwerkzeugs (40) größer als der Außendurchmesser des röhrenförmigen Elements (30, 130) ist, um die Bearbeitung des Bodenabschnitts (ST) durch Rotation der Welle (20, 120) zu ermöglichen, und in der eingezogenen Position das Mischwerkzeug (40) geeignet ist, in das röhrenförmige Element (30, 130) eingesetzt zu werden.

7. Bearbeitungsvorrichtung (10, 100) nach Anspruch 6, bei der das Mischwerkzeug (40) ferner Federmittel (44) umfasst, die geeignet sind, das Ausfahren des Mischarms (42) aus dem röhrenförmigen Element (30) hervorzurufen und seine Rückkehr in die eingezogene Position beim Einsetzen des unteren Teils (28) der Welle (20, 120) in das röhrenförmige Element (30, 130) zu ermöglichen.

8. Bearbeitungsvorrichtung (10, 100) nach einem der Ansprüche 1 bis 7, bei der das Kupplungssystem (50, 150) geeignet ist, das röhrenförmige Element (30, 130) und die Drehwelle (20, 120) in Drehung um die Hauptachse (X) in beide Drehrichtungen zu verbinden.

9. Bearbeitungsvorrichtung (10, 100) nach einem der Ansprüche 1 bis 8, bei der das Kupplungssystem (50, 150) ferner dazu geeignet ist, das röhrenförmige Element (30, 130) und die Drehwelle (20, 120) in Translation entlang der Hauptachse (X) in stromaufwärtige Richtung zu verbinden.

10. Bearbeitungsvorrichtung (10, 100) nach Anspruch 9, bei der das Kupplungssystem (50) ferner Anschlagmittel (56) umfasst, die dazu vorgesehen sind, mit der Drehwelle (20) zusammenzuwirken, so dass die Drehwelle (20) und das röhrenförmige Element (30) in Translation in stromaufwärtige Richtung unabhängig von der Winkelposition der Drehwelle (20) verbunden werden.

11. Bearbeitungsvorrichtung (10, 100) nach Anspruch 10, bei der die Anschlagmittel (56) einen Kragen umfassen, der auf der Innenseite des röhrenförmigen Elements (30) ausgebildet ist, wobei der Innendurchmesser des Kragens (56) kleiner als der maximale Durchmesser der Drehwelle (20) auf dem Abschnitt der Welle (20), der sich stromabwärts zu dem Kragen (56) befindet ist.

12. Bearbeitungsvorrichtung (10, 100) nach einem der Ansprüche 1 bis 11, umfassend mindestens zwei Mischvorrichtungen (40), die axial entlang der Hauptachse (X) beabstandet sind.

13. Bearbeitungsvorrichtung (10, 100) nach einem der Ansprüche 1 bis 12, bei der das Kupplungssystem (50) in der Nähe des unteren Endes (28) der Drehwelle (20) und des röhrenförmigen Elements (30) vorgesehen ist.

14. Verfahren zur Bearbeitung eines Bodenabschnitts, bei dem eine Bearbeitungsvorrichtung (10, 100) nach einem der Ansprüche 1 bis 13 bereitgestellt wird, wobei das Verfahren ferner mindestens die folgenden Schritte umfasst:
- Verbinden des röhrenförmigen Elements (30, 130) und der Drehwelle (20, 120), wobei das Kupplungssystem (50, 150) in seine erste Anordnung gebracht wird,
- Absenken der Drehwelle (20, 120) in den Boden (S) gemeinsam mit dem röhrenförmigen Element (30, 130) bis zu dem zu bearbeitenden Bodenabschnitt (ST),
- Trennen der Drehwelle (20, 120) von dem röhrenförmigen Element (30, 130), wobei das Kupplungssystem (50, 150) in seine zweite Anordnung gebracht wird,
- Verschieben der Drehwelle (20, 120) in Bezug zum röhrenförmigen Element (30, 130) bis zur Einführung des Mischwerkzeugs (40) in den zu bearbeitenden Bodenabschnitt (ST),
- Ausfahren des Mischwerkzeugs (40), und
- Drehen der Welle (20, 120), wobei ein Fluid in den Bodenabschnitt durch die Längsleitung (22) eingespritzt wird, wodurch der Boden des Bodenabschnitts (ST) mit dem Fluid gemischt wird.

15. Verfahren zur Bearbeitung eines Bodenabschnitts nach Anspruch 14, bei dem nach der Bearbeitung des Bodenabschnitts (ST) das röhrenförmige Element (30, 130) gemeinsam mit der Drehwelle (20, 120) aus dem Boden herausgezogen wird.

16. Verfahren zur Bearbeitung eines Bodenabschnitts nach Anspruch 14 oder 15, bei dem das eingespritzte Fluid ein Reinigungsmittel ist.

17. Verfahren zur Bearbeitung eines Bodenabschnitts nach Anspruch 14 oder 15, bei dem das eingespritzte Fluid ein hydraulisches Bindemittel ist.

## Claims

1. A device (10, 100) for treating a portion of soil (ST), comprising:
a rotary shaft (20, 120) extending along a main axis (X) and presenting a top end (26) pointing upstream and a bottom end (28) pointing downstream;
· at least one deployable mixer tool (40) fastened to the rotary shaft (20, 120) in the vicinity of its bottom end (28); and
· a longitudinal pipe (22) for injecting a fluid into the proximity of the bottom end of the rotary shaft (20, 120);
**characterized in that** it further comprises:
· a boring tool (24) situated at the bottom end of the shaft;
· an outer tubular element (30, 130) extending along an axis parallel to the main axis (X) of the rotary shaft (20, 120), the rotary shaft (20, 120) being arranged inside said tubular element (30, 130); and
· a coupling system (50, 150) between the rotary shaft (20, 120) and the tubular element (30, 130), said coupling system (50, 150) being, in a first configuration, capable of constraining the tubular element (30, 130) and the rotary shaft (20, 120) to move together in rotation about the main axis (X), in at least one direction of rotation, and for constraining the tubular element (30, 130) and the rotary shaft (20, 120) to move together in translation along the main axis (X), at least in the downstream direction, and said coupling system (50, 150) being, in a second configuration, capable of releasing said movement in rotation and in translation.

2. A treatment device (10, 100) according to claim 1, wherein the mixer tool (40) is housed in the tubular element (30, 130) when the coupling system (50, 150) is in its first configuration.

3. A treatment device (10, 100) according to claim 1 or claim 2, wherein the mixer tool (40) is adapted to be extracted from the tubular element (30, 130) and to be introduced into a portion of soil to be treated (ST) when the coupling system (50, 150) is in its second configuration.

4. A treatment device (10, 100) according to any one of claims 1 to 3, wherein the coupling system (50, 150) is a bayonet system.

5. A treatment device (10, 100) according to claim 4, wherein the coupling system (50) includes at least one lug (54) formed on the inside face of the tubular element (30) and a corresponding number of catches (52) formed on the rotary shaft (20), each lug (54) being adapted to come into abutment radially and axially against a catch (52).

6. A treatment device (10, 100) according to any one of claims 1 to 5, wherein the deployable mixer tool (40) comprises at least one deployable mixer arm (42) fastened to the bottom end (28) of the rotary shaft (20, 120) and extending laterally relative to the main direction (X) of the shaft (20, 120), said arm (42) presenting a deployed position and a retracted position, such that in the deployed position the span of the mixer tool (40) is greater than the outside diameter of the tubular element (30, 130) to enable the portion of soil (ST) to be treated by rotating the shaft (20, 120), and in the retracted position, the mixer tool (40) is suitable for being inserted inside the tubular element (30, 130).

7. A treatment device (10, 100) according to claim 6, wherein the mixer tool (40) further includes spring means (44) suitable for causing the mixer arm (42) to deploy out from the tubular element (30) and for enabling it to return into its retracted position while the bottom portion (28) of the shaft (20, 120) is being inserted in the tubular element (30, 130).

8. A treatment device (10, 100) according to any one of claims 1 to 7, wherein the coupling system (50, 150) is suitable for constraining the tubular element (30, 130) and the rotary shaft (20, 120) to move together in rotation about the main axis (X) in both directions of rotation.

9. A treatment device (10, 100) according to any one of claims 1 to 8, wherein the coupling system (50, 150) is also adapted to constrain the tubular element (30, 130) and the rotary shaft (20, 120) to move together in translation along the main axis (X) in the upstream direction.

10. A treatment device (10, 100) according to claim 9, wherein the coupling system (50) further includes abutment means (56) adapted to co-operate with the rotary shaft (20) so that the rotary shaft (20) and the tubular element (30) are constrained to move together in translation in the upstream direction regardless of the angular position of the rotary shaft (20).

11. A treatment device (10, 100) according to claim 10, wherein the abutment means (56) comprise a collar formed on the inside face of the tubular element (30), the inside diameter of said collar (56) being smaller than the maximum diameter of the rotary shaft (20) on the portion of said shaft (20) that is situated downstream from said collar (56).

12. A treatment device (10, 100) according to any one of claims 1 to 11, including at least two mixer devices (40) that are spaced apart axially along the main axis (X).

13. A treatment device (10, 100) according to any one of claims 1 to 12, wherein the coupling system (50) is provided in the vicinity of the bottom end (28) of the rotary shaft (20) and of the tubular element (30).

14. A method of treating a portion of soil, wherein a treatment device (10, 100) according to any one of claims 1 to 13 is provided, said method further comprising at least the following steps:
· constraining the tubular element (30, 130) and the rotary shaft (20, 120) to move together by bringing the coupling system (50, 150) into its first configuration;
· lowering the rotary shaft (20, 120) into the soil (S) together with the tubular element (30, 130) until reaching the portion of soil to be treated (ST);
· unconstraining the rotary shaft (20, 120) and the tubular element (30, 130) by bringing the coupling system (50, 150) into its second configuration;
moving the rotary shaft (20, 120) relative to the tubular element (30, 130) until the mixer tool (40) is inserted into the portion of soil for treatment (ST);
· deploying the mixer tool (40); and
· rotating the shaft (20, 120) while injecting a fluid into the portion of soil via the longitudinal pipe (22), whereby the portion of soil (ST) is mixed with said fluid.

15. A method of treating a portion of soil according to claim 14, wherein, after the portion of soil (ST) has been treated, the tubular element (30, 130) is extracted from the soil together with the rotary shaft (20, 120).

16. A method of treating a portion of soil according to claim 14 or claim 15, wherein the injected fluid is a depolluting agent.

17. A method of treating a portion of soil according to claim 14 or claim 15, wherein the injected fluid is a hydraulic binder.
